(19) Europäisches Patentamt
European Patent Office
Office européen des brevets

(11) Numéro de publication: **0 046 437**
**B1**

# (12) FASCICULE DE BREVET EUROPEEN

(45) Date de publication du fascicule du brevet: **27.01.88**

(51) Int. Cl.⁴: **C 22 B 41/00**, C 22 B 3/00, C 01 G 17/00

(21) Numéro de dépôt: **81401313.2**

(22) Date de dépôt: **17.08.81**

(54) **Procédé d'extraction sélective du germanium.**

(30) Priorité: **15.08.80 US 178583**

(43) Date de publication de la demande: **24.02.82 Bulletin 82/8**

(45) Mention de la délivrance du brevet: **27.01.88 Bulletin 88/4**

(84) Etats contractants désignés: **AT BE CH DE FR GB IT LI LU NL SE**

(56) Documents cités:
BE - A - 881 273
FR - A - 2 106 033
FR - A - 2 317 366
US - A - 3 637 711

HYDROMETALLURGY, vol. 5, no. 2, 3 février 1980,Amsterdam, NL,G. COTE et al.: "Liquid-liquid extraction of germanium with oxine derivatives", pages 149-160
J. INORG. NUCL. CHEM., vol. 41, 1979,Pergamon Press Ltd, GB,B. MARCHON et al.: "Some typical behaviours of the beta-dodecenyl 8-hydroxyquinoline through its reactions with germanium (IV)", pages 1353-1363
CHEMICAL ABSTRACTS, vol. 89, no. 12, 18 septembre 1978, réf. 95718q, page 359,Columbus, Ohio,US, L.V. KOVTUN et al.: "Extraction of germanium (IV) by 5,7-dibromo-8-hydroxyquinoline"
Het Ingenieursblad (1972), no. 15-16, p. 408-416
Thèse de Doctorat d'Etat, G. COTE (10.12.1980), p. 120
LAKSHMANAM et al., Proceedings International Solvent Extraction Conference, Society of Chemical Industry, London, 1974, vol. 1, p. 699
FLETT et al, J. Inorg. Nucl. Chem., 1975, vol. 37, p. 1967

(73) Titulaire: **SOCIETE MINIERE ET METALLURGIQUE DE PENAROYA Société anonyme dite:, Tour Maine-Montparnasse 33, avenue du Maine, F-75755 Paris Cédex 15 (FR)**

(72) Inventeur: **Rouillard, Denise épouse Bauer, 8 bis, allée de la Fontaine, F-93340 Le Raincy (FR)**
Inventeur: **Cote, Gérard, 3, Impasse sous la Tour, F-92160 Antony (FR)**
Inventeur: **Fossi, Paolo, 52, Avenue de Cressac, F-78310 Elancourt (FR)**
Inventeur: **Marchon, Bruno, 42, rue de Berri, 75008 Paris (FR)**

(74) Mandataire: **Ricalens, François, Chef du Service de la Propriété Industrielle du Groupe IMETAL 1, avenue Albert Einstein, F-78191 Trappes Cedex (FR)**

(56) Documents cités: (suite)

**Le dossier contient des informations techniques présentées postérieurement au dépôt de la demande et ne figurant pas dans le présent fascicule.**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 046 437 B1

## Description

La présente invention a pour objet l'extraction sélective du germanium à partir d'une solution aqueuse acide d'un pH au plus égal à 2 contenant sous forme de sulfate, outre le germanium, au moins un autre métal choisi parmi le fer ou le cuivre et éventuellement le cadmium, le zinc, le cobalt, l'arsenic, l'aluminium, le gallium et le nickel.

La séparation du germanium des solutions acides a fait l'objet d'une grande attention en raison de ses implications économiques, en particulier dans le domaine de la production du zinc. L'électrolyse du zinc ne peut être réalisée avec un bon rendement que lorsque le germanium a été complètement éliminé de l'électrolyte. Cette élimination est par conséquent une opération préliminaire à la récupération du zinc métallique des solutions en contenant. En outre, la récupération du germanium de telles solutions constitue la principale source de ce métal dont les applications sont essentiellement dans le domaine de l'électronique, de l'optique infrarouge, des fibres optiques, de la détection des particules ionisées et de la chimie des polymères.

Pour des raisons d'ordre économique, la lixiviation des minerais une fois grillés est réalisée avec de l'acide sulfurique et conduit à des solutions contenant essentiellement du sulfate de zinc (environ 100 g/l), du germanium (IV) (0,1–1 g/l) et d'autres éléments comme le cadmium, le magnésium, etc. Comme ces métaux n'interfèrent pas avec l'électrolyse du zinc ou sont facilement éliminés, une séparation sélective du germanium des solutions acides serait particulièrement avantageuse pour l'isolation de ce métal.

Des procédés conventionnels pour la séparation du germanium des solutions acides de lixiviation (précipitation avec du tannin, distillation du tétrachlorure de germanium, etc.) sont très compliqués. Par suite, l'extraction liquide-liquide et les méthodes de séparation par résine apparaissent particulièrement attrayantes et ont été très largement étudiées. De nombreux solvants tels que le tétrachlorure de carbone, le chloroforme et le phosphate de tributyle, et des extractants tels que les amines à longue chaîne, des acides alcoylphosphoriques, des acides phosphiniques, l'oxine, des acides hydroxamiques et l'alcoylpyrocatechol ainsi que de nombreuses résines ont été proposés. Toutefois, la faible capacité de la majorité des résines et des extractants, leurs coûts prohibitifs et les conditions sévères de séparation qu'elles impliquent parfois ont souvent limité leur application. Les α-hydroxyamines, récemment introduits, apparaissaient jusqu'à récemment comme les réactifs les plus adaptés pour l'extraction à l'échelle industrielle du germanium. Leur application à l'échelle industrielle a été étudiée et des expériences à l'échelle pilote ont été menées à bien; cela est décrit dans l'article de De Schepper, A. Hydrometallurgy, 1 (1976) 291. Quoiqu'étant particulièrement intéressant, ces composés citent toujours des conditions très strictes (par exemple haute acidité de la solution aqueuse et forte concentration en extractant) pour être efficaces.

Par ailleurs, une partie des auteurs de la présente invention ont publié deux articles, dans Hydrometallurgy, vol. 5, no 2, 3, février 1980, Amsterdam, NL, pages 149–160 et dans J. Inorg. Nucl. Chem., vol. 41, 1979, Pergamon Press Ltd, GB, pages 1353–1363. Ces articles montraient qu'il était possible d'extraire en phase liquide-liquide le germanium sélectivement vis-à-vis de certains métaux en milieu sulfurique. Toutefois, ces articles montraient que la récupération du germanium était extrêmement longue à partir de la phase organique. Il était nécessaire de combiner une réextraction sans agitation et une réextraction avec agitation pendant une durée voisine de quatre heures, ce qui rendait cette technique extrêmement peu attractive.

C'est la raison pour laquelle un des buts de la présente invention est de fournir un procédé de récupération du germanium présent dans la phase organique de manière rapide.

Il convient de noter ici que certaines parties des articles mentionnés ci-dessus ont été reprises de manière à faciliter la compréhension de l'invention.

Un autre objet de l'invention est de fournir un procédé pour l'extraction sélective du germanium de telles solutions nécessitant seulement de très courts temps de contact entre ladite solution et un milieu organique.

Un autre objet enfin de la présente invention est de séparer le germanium des solutions aqueuses contenant du zinc par un procédé de faible coût.

Selon la présente invention, un procédé pour l'extraction sélective du germanium à partir d'une solution aqueuse acide d'un pH au plus égal à 2 contenant sous forme de sulfate, outre le germanium, au moins un autre métal choisi parmi le fer ou le cuivre et éventuellement le cadmium, le zinc, le cobalt, l'arsenic, l'aluminium, le gallium et le nickel, la concentration en groupements sulfates de la solution étant au moins égale à 1 M, ledit procédé comportant:

– une extraction du germanium de ladite solution aqueuse par mise en contact de ladite solution avec un milieu organique liquide qui contient un diluant et un extractant, ledit diluant étant nonmiscible avec ladite solution aqueuse, ledit extractant étant choisi parmi les dérivés de l'oxine ayant une longue chaîne hydrocarbonée de 8 à 19 atomes de carbone, ladite étape d'extraction formant une phase aqueuse contenant la plus grande partie dudit au moins un autre métal, et une phase organique contenant la plus grande partie du germanium initialement contenu dans ladite solution aqueuse, et

– une élution du germanium de ladite phase organique par mise en contact de ladite phase avec un milieu aqueux, ladite étape d'élution formant une phase aqueuse contenant la plus grande partie du germanium de ladite solution aqueuse et une phase organique contenant ledit diluant et ledit extractant.

De préférence l'élution est réalisée à une température supérieure à 40 °C sous agitation.

Selon l'invention, la longue chaîne hydrocarbonée dudit extractant comporte au moins huit atomes de carbone et de préférence jusqu'à seize atomes de carbone, et a au moins une insaturation éthylénique. De préférence, ledit extractant est la β-dodécényl-hydroxy-8-quinoléine, mais d'autres positions de ladite chaîne sont dans le domaine de l'invention.

Le pH de ladite solution aqueuse acide est au plus égal à 2. Si ladite solution aqueuse n'est pas suffisamment acide, ladite solution est de préférence acidifiée, par exemple par addition d'acide sulfurique. Le diluant est de préférence choisi dans le groupe constitué par les composés aliphatiques purs et leurs mélanges ainsi que les fractions pétrolières et de tels composés et fractions mélangés avec une proportion faible (de 5 à 20% en volume) d'un composé polaire liposoluble tel qu'un alcool ou d'un phénol ayant de préférence 5 à 15 atomes de carbone, par exemple le n-octanol.

Ledit milieu aqueux utilisé dans l'étape d'élution est de préférence un milieu alcalin dont le pH est supérieur à 13.

Ledit milieu aqueux peut également être de l'acide fluorhydrique dilué (1 à 10% de HF en poids) de préférence à raison de 2 à 5% en poids de HF.

Pendant l'étape d'extraction, la température est de préférence ambiante ou inférieure, mais la température peut atteindre 80 °C sans que cela gêne, et, pendant l'opération d'élution, la température peut être ambiante ou supérieure.

La concentration de l'extractant dans le milieu organique utilisé dans l'étape d'extraction est de préférence tel qu'il y ait au moins 4 moles d'extractant pour 1 mole de germanium de la solution acide aqueuse.

D'autres objets et d'autres caractéristiques de la présente invention seront apparents dans la suite de la description et des revendications.

La figure 1 est une courbe illustrant les variations du germanium extrait de la solution acide de lixiviation, selon l'acidité du milieu.

La figure 2 est une courbe montrant l'influence de la température sur l'élution dans un procédé selon la présente invention.

Un procédé selon l'invention comporte essentiellement deux principales étapes, un étape d'extraction et une étape d'élution.

L'étape d'extraction comporte l'extraction du germanium de ladite solution aqueuse par mise en contact de ladite solution avec un milieu organique qui contient un diluant et un extractant. L'étape d'élution comporte l'élution du germanium à partir d'une phase organique formée pendant ladite étape d'extraction, par mise en contact avec un milieu alcalin ou un milieu contenant de l'acide fluorhydrique, ces milieux étant des milieux aqueux.

Cependant, ledit procédé peut comporter d'autres étapes. Par exemple, si ladite solution aqueuse acide n'est pas suffisamment acide, il est préférable de l'acidifier, par exemple par addition d'acide sulfurique. Cependant, d'autres acides minéraux non complexants bien connus de l'homme de métier peuvent être utilisés. L'acide sulfurique est préférable, en particulier parce qu'il est très peu coûteux et facilement accessible, mais il possède aussi quelques avantages indiqués par la suite, et plus particulièrement le fait que des ions sulfate ou hydrogéno-sulfate peuvent être des facteurs favorisant l'extraction.

Cependant, entre l'étape d'extraction et l'étape d'élution, ledit procédé comporte de préférence au moins une étape de lavage dans laquelle la phase organique formée pendant ladite étape d'extraction est mise en contact avec de l'eau qui élimine la plus grande part des métaux résiduels, par exemple le zinc. Une telle étape de lavage élimine au moins partiellement la petite quantité d'ions $H^+$ qui pouvaient rester dans ladite phase organique. Il a été également observé de manière surprenante qu'une telle étape de lavage réalise une purification de ladite phase organique.

Le milieu de lavage est de préférence de l'eau si les volumes ne sont pas trop importants, ladite eau étant acidifiée par des ions $H^+$ ($H_2SO_4$) déplacés pendant ladite étape, ou une solution d'acide sulfurique ayant une concentration comprise entre 0,1 et 0,5 N, de préférence environ 0,2 N.

Si une bonne élimination des impuretés est désirée, il est possible d'utiliser des concentrations suprérieures en acide sulfurique, et ce jusqu'à une concentration de l'ordre de 2 N.

En outre, après l'étape d'élution, ladite phase aqueuse peut être traitée pour la récupération de germanium métal ou d'autres produits utiles.

Une des principales caractéristiques de l'invention est l'extractant utilisé qui est choisi parmi les dérivés de l'oxine ayant une lognue chaîne hydrocarbonée. Ladite longue chaîne comporte au moins 8 et jusqu'à 19 atomes de carbone. Il a de préférence au moins une insaturation éthylénique.

De préférence, l'extractant est un composé de la formule suivante:

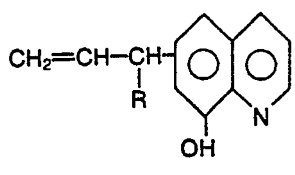

dans laquelle R est un radical alcoyle ayant de 8 à 16 atomes de carbone, le total des atomes de carbone dans R étant au moins suffisant pour assurer que le chelate du germanium avec ledit composé est soluble dans un solvant hydrocarboné.

Un composé particulièrement adéquat est la 7-[3-(5,5,7,7-tétraméthyl-1-octenyl)]-hydroxy-8-quinoléine, un dérivé β-alkenyl de la hydroxy-8-quinoléine qui a la structure ci-après:

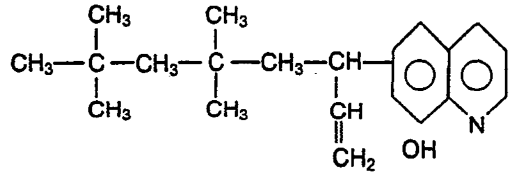

Un tel composé est synthétisé en faisant réagir de l'hydroxy-8-quinoléine sous forme de sel de sodium avec un chlorure de dodécényl.

D'autres composés très utiles sont la 7-[3-(5,5-diméthyl-1-héxényl)]hydroxy-8-quinoléine et la 7-[1-(5,5,7,7-tétraméthyl-2-octényl)]hydroxy-8-quinoléine.

De tels composés et leur préparation sont décrits dans le brevet U.S. No 3 637 711 de W.M. BUDDE et dans le brevet australien No 57 173/69 au nom de ASHLAND OIL INC.

Un extractant préféré est la β-dodécényl hydroxy-8-quinoléine ayant la formule

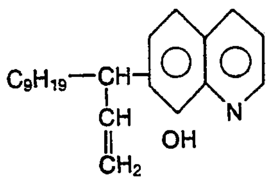

La description suivante a trait à des des données détaillées où ledit extractant préféré, qui est appelé «βoxH» est donné comme exemple. L'extractant est accessible commercialement sous la dénomination commerciale KELEX 100 de la société SCHEREX.

Comme le montre la figure 1, l'influence de l'acidité dans l'étape d'extraction est importante. Sur cette figure, on a représenté les pourcentages de germanium extrait obtenus pour différentes acidités. Les résultats de la figure 1 sont obtenus durant une étape d'extraction dans du kérosène à plus de 10% d'octanol avec différentes concentrations de βoxH. Les courbes a, b, c et d sont respectivement pour des concentrations en βoxH de $2{,}2.10^{-2}$ M, $3{,}1.10^{-2}$ M, $8{,}6.10^{-2}$ M et 0,42 M. La concentration en germanium (IV) était de $1{,}4.10^{-2}$ M. Le pH est obtenu par addition d'acide sulfurique, ou par neutralisation partielle de l'acide sulfurique par de la soude.

L'examen de la figure 1 montre que l'extraction du germanium (IV) n'est pas uniforme à l'intérieur du domaine complet de pH. En particulier, l'extraction est la plus efficace à de fortes acidités (pH $<1$), bien qu'une légère décroissance apparaisse pour les concentrations en acide sulfurique supérieure à 2 M (courbes a et b). A de faibles acidités et dans les milieux neutres (pH de 2 à 8), l'extraction est beaucoup moins efficace mais elle devient indépendante du pH (le pH n'a pas d'influence sur le taux d'extraction et reste lui-même constant pendant toute l'extraction). Aucune extraction n'est observée à partir des solutions alcalines (pH $>12$) à quelque concentration de βoxH que ce soit. Ainsi, le domaine d'acidité peut être extrait divisé en trois parties correspondant aux hautes, basses et non-extraction. Pour l'invention, la seule partie intéressante est la partie correspondante à une forte extraction, c'est-à-dire à des pH inférieurs à 2.

Les maxima des courbes a et b montrent aussi que la quantité molaire du germanium extrait n'est pas loin d'un quart de la quantité molaire de βoxH présent. Ainsi, pour obtenir l'extraction de pratiquement tout le germanium, la quantité molaire de βoxH doit être au moins quatre fois la quantité exprimée en moles de germanium. En pratique, il est préférable que la quantité molaire de βoxH soit au moins 5 à 10 fois celle du germanium.

Dans ces conditions, la figure 1 montre que 100% du germanium peut être extrait selon l'invention. Cependant, la quantité totale extraite n'est pas le seul paramètre intéressant puisque, pour des raisons d'ordre économique, la vitesse de réaction a une importance considérable.

La vitesse de l'extraction dépend de la concentration en extractant et de la concentration en germanium. Pour déterminer la vitesse totale d'extraction, des tests ont été réalisés avec la même concentration en βoxH d'une part et en Ge (IV) d'autre part, mais à des pH différents. La concentration en βoxH était de 200 g/l, et celle de Ge (IV) était de 1,0 g/l. Dans un premier essai, le pH était très acide, puisque le milieu contenait 0,5 M d'$H_2SO_4$, et dans un deuxième essai, le pH était égal à 4. Dans le premier test (avec un Kelex commercial et 20% d'octanol), plus de 50% du germanium était extrait après 2 minutes seulement et, dans le deuxième essai, un temps de plus de 20 minutes était nécessaire pour l'extraction de 50% du germanium (Kelex purifié par distillation donne une vitesse de réaction plus faible).

Ces expériences montrent que le milieu fortement acide nécessaire pour des pourcentages élevés d'extraction est aussi nécessaire pour de grandes vitesses d'extraction.

Ainsi, l'étape d'extraction du procédé selon l'invention est très rapide et presque quantitative, puisque quasiment tout le germanium est extrait très rapidement.

L'acide utilisé pour fixer le pH aux valeurs nécessaires à une bonne extraction est de préférence l'acide sulfurique à un niveau de concentration de, par exemple 25 à 42°Bé.

La figure 1 montre également que, pour des concentrations de βoxH égales à $2{,}2.10^{-2}$ et $3{,}1.10^{-2}$ M, le germanium est ré-extrait quant l'acidité croît de $H_2SO_4$ 2 M à $H_2SO_4$ 4 M. Toutefois, une telle ré-extraction est limitée et l'étape d'élution utilise de préférence un milieu alcalin.

L'influence de la concentration en βoxH est maintenant examinée. Il a été mentionné ci-dessus qu'une quantité minimum d'extractant était nécessaire aux extractions de substantiellement tout le germanium, cette quantité étant au moins 4 fois et de préférence au moins 5 à 10 fois plus. Cependant, quand la concentration de βoxH est accrue, la vitesse d'extraction est aussi accrue. Ceci est un résultat très trivial connu par les hommes de métier.

Un grand avantage de l'invention est à souligner en ce qui concerne la concentration dudit

extractant. Ledit extractant est un produit cher, mais sa concentration est faible; ainsi, les pertes physiques du milieu organique correspondent à de faibles pertes d'extractant. Au contraire, dans les procédés utilisant des produits tels que le LIX 63 (commercialisé par General Mills Inc.) qui sont très concentrés, les pertes en extractant sont très importantes et coûteuses.

Dans le but d'examiner le rôle du diluant dans l'extraction du germanium dans la phase organique, des expériences ont été réalisées à deux acidités différentes de la phase aqueuse: d'une part à une concentration d'acide sulfurique de 1,5 M, et d'autre part à un pH de $5 \pm 0{,}5$. Dans tous ces tests, le temps de contact des deux phases était suffisamment long pour assurer l'équilibre. La concentration de βoxH utilisé était de 15 g/l et de 40 g/l, donnant des valeurs aisément mesurables de l'extraction (ni trop hautes ni trop faibles).

Les diluants utilisés furent le kérosène avec 10% en volume d'octanol, le n-octanol, une fraction pétrolière contenant principalement des molécules aliphatiques (Escaid 100) et une fraction pétrolière contenant principalement des molécules aromatiques (Solvesso 150).

L'examen des résultats montre des variations significatives de l'extraction quand un diluant est remplacé par un autre. La hiérarchie parmi les diluants n'est pas la même pour les deux acidités différentes. A ph 5, le n-octanol était le plus efficace. Cependant, aux faibles pH (c'est-à-dire dans les conditions selon la présente invention), le meilleur diluant était le kérosène avec 10% en volume d'octanol, qui est légèrement plus favorable que la fraction pétrolière contenant essentiellement des molécules aliphatiques (Escaid 100).

Le diluant contenait une faible proportion de n-alcanol (10% en volume) essentiellement en raison du fait qu'une telle addition évite la formation d'une troisième phase pendant l'extraction liquide-liquide. Cependant, l'addition de n-alcanol ayant de 5 à 12 atomes de carbone et plus généralement l'addition d'un agent de dissolution lipophile polaire, a un autre effet sur les réactions d'extraction. En fait, de telles additions changent la tension interfaciale des phases aqueuse et organique et la vitesse d'extraction qui progresse surtout à l'interface (comme indiqué par les coefficients de distribution de βoxH entre les phases aqueuse et organique, lesdits coefficients étant de l'ordre de $10^7$).

Des expériences montrent que la vitesse d'extraction est légèrement diminuée quand la température augmente. Ainsi, une température ambiante ou faible est préférable pour l'étape d'extraction sans que toutefois cela soit essentiel.

Un aspect important pour l'application commerciale est la sélectivité de l'extraction. Les données de la littérature montrent que l'extraction du germanium (IV) par les extractants du type βoxH peut être sélective vis-à-vis du cadmium, du zinc, du cobalt et du nickel, mais peu sélective vis-à-vis du cuivre et du fer. La littérature est muette sur les autres éléments pour lesquels l'extraction a été démontrée sélectivement selon la présente demande. Une évaluation des quantités d'une telle sélectivité est indiquée dans l'exemple suivant.

Une étape d'extraction a été réalisée avec du Kelex 100 à 10% dans du kérosène contenant 10% d'octanol, à température ambiante, avec un rapport organique/aqueux de 1. La solution aqueuse initiale A et les phases aqueuses après une première et une deuxième extraction respectivement B et C présentent les concentrations exprimées en grammes par litre:

| | $H^+$ | Ge | In | Fe | Cu | Zn | As |
|---|---|---|---|---|---|---|---|
| A | 3,08 | 1,15 | 0,32 | 1,8 | 0,93 | 48 | 11 |
| B | 2,72 | 0,05 | 0,32 | 1,8 | 0,895 | 45 | 11 |
| C | 2,30 | | 0,32 | 1,8 | 0,963 | 50 | |

De tels résultats montrent l'excellente sélectivité de l'étape d'extraction, même vis-à-vis du fer. Pour obtenir une telle sélectivité il est préférable d'être en milieu sulfate au moins 1 M permettant la formation du complexe supposé Ge $(\beta ox)_3HSO_4$.

L'étape d'élution du procédé selon l'invention est maintenant développé. Pendant cette étape, ladite phase organique formée pendant l'étape d'extraction est mise en contact avec un milieu alcalin, ladite étape d'élution formant une phase aqueuse contenant la plus grande partie du germanium sous forme de liqueur aqueuse et une phase organique contenant ledit diluant et extractant récupérés qui sont recyclés vers l'étape d'extraction.

L'influence de l'alcalinité sur l'étape d'élution est maintenant envisagée.

L'effet de la concentration en ions hydroxyde sur l'élution de ladite phase organique chargée à des acidités correspondant aux liqueurs issues de lixiviations industrielles est complexe. Quand la phase organique est mise en contact avec une solution alcaline aqueuse, la réaction générale d'élution forme les βoxH libres (ou $\beta ox^-$) en au moins deux étapes. Premièrement, les anions hydroxyde sont extraits de la solution aqueuse dans la phase organique où ils réagissent pour produire un composé de couleur rouge sombre. La coloration apparaît quelques secondes après que les deux phases aient été mises en contact et augmente dans la minute qui suit. Deuxièmement, la coloration rouge sombre disparaît lentement par décomposition et le germanium (IV) est élué. Dans la première étape, plus la concentration en ions hydroxyde est élevée, plus la réaction est lente. Pendant la deuxième étape, le processus est inversé.

Des expériences montrent qu'un pH élevé est préférable et que la solution alcaline aqueuse est de préférence une solution de soude car la soude est un milieu fortement alcalin, peu coûteux et facilement accessible. Le pH dudit milieu alcalin est de préférence supérieur à 10 et ledit milieu alcalin est de préférence NaOH 1 à 3 M. Des pH compris entre 13 et 14,7 sont particulièrement avantageux.

Les solutions alcalines autres que la soude réextraient également le germanium lors de

l'étape d'élution. De bons résultats sont obtenus avec de l'ammoniaque 3N et le carbonate de sodium 3N.

L'influence de la température sur l'élution du germanium est maintenant prise en considération, en se référant à la figure 2. La figure 2 montre des courbes représentant les variations de pourcentage de germanium élué en fonction du temps. La concentration initiale était de $9{,}5.10^{-3}$ M et celle de l'extractant de type βoxH $5{,}0.10^{-2}$ M. Le milieu alcalin était une solution aqueuse d'hydroxyde de sodium 1,2 M. Les courbes a, b, c, d, e et f sont respectivement pour les températures 25 °C, 30 °C, 40 °C, 50 °C, 60 °C et 70 °C. La figure 2 montre que la température a une grande influence sur l'étape d'élution. Ainsi, il est préférable et industriellement indispensable que l'étape d'élution soit réalisée à une température d'au moins 40 °C. De telles températures peuvent être aisément atteintes à l'aide des calories qui autrement seraient perdues. Cependant, un tel chauffage accroît la température de la phase organique qui pourrait être refroidie avant usage pour l'étape d'extraction.

Lorsque la température est d'au moins 40 °C, il est hautement préférable d'agiter le milieu éluant, car la vitesse de réaction est alors suffisamment élevée pour être supérieure à celle permise par l'interface limité des deux phases au repos.

La ré-extraction facile et quasi complète du germanium à l'aide d'une solution alcaline, comme une solution de soude 3 N, selon l'invention, est un grand avantage. Des expériences avec des solutions contenant 3, 5, 7, 5 et 10% de Kelex dans du kérosène contenant lui-même 10% d'octanol donnent de manière régulière des taux de ré-extraction supérieurs à 99%.

Une expérimentation en continu pendant une longue période (102 h à 70–80 °C) dans une installation pilote bouclée sur elle-même montre une absence de dégradation du Kelex et de très petites pertes de cet extractant.

Le comportement des extractants selon l'invention présente de grandes différences avec celui de l'hydroxy-8-quinoléine, dont le nom vulgaire est «oxine». Les applications de l'oxine pour les extractions liquide-liquide sont limitées en raison de sa haute solubilité dans des milieux acide et alcalin. En revanche, les extractants selon la présente invention ont des substituants hydrophobes qui remplacent un ou plusieurs H dans la molécule. De tels extractants ont une faible solubilité dans des solutions aqueuses acides et/ou alcalines et donnent des coefficients de distribution élevés. Le 7-β-dodécényl hydroxy-8-quinoléine (βoxH) est un dérivé intéressant de l'oxine parce que, parmi d'autres composés intéressants selon l'invention, il est accessible commercialement sous le nom de Kelex 100 de la société SCHEREX. Le 7-2-éthyl-héxyl-hydroxyquinoléine, accessible commercialement sous le nom de Kelex 108 de la société SCHEREX, et le 7-undécyl-hydroxy-8-quinoléine se comportent comme l'extractant βoxH.

Exemple 1:
Dépendance de l'extraction de l'acidité.

Une solution de sulfate de zinc contenant 119 mg/l de germanium et ayant des acidités variées est mise en contact pendant 15 minutes avec une solution organique contenant 5% de Kelex, 10% d'octanol, 85% d'Hexol D 100. Les résultats de l'extraction sont résumés dans le tableau suivant.

| Acidité O/A | 0,42 N | 0,6 N | 0,76 N | 0,84 N | 1,1 N | 1,5 N | 2 N |
|---|---|---|---|---|---|---|---|
| 1 | 75,6 % | – | – | – | – | – | – |
| 0,5 | 54,6 % | 87,6 % | 98,6 % | 98,3 % | 98,6 % | 98,2 % | 99,4 % |
| 0,2 | – | – | 56,7 % | 63,4 % | – | 92,2 % | 99,1 % |
| 0,1 | – | – | 36,3 % | 43,9 % | – | 89,2 % | 95,6 % |
| | | | Rendements d'extraction % | | | | |

Exemple 2:
Elution par l'acide fluorhydrique.

Une phase organique chargée en germanium est agitée avec de l'acide fluorhydrique contenant 2% en poids d'acide fluorhydrique pendant 15 minutes avec les phases organique et aqueuse égales à 1. A température ambiante, le rendement est relativement faible, c'est-à-dire 15%. A 50 °C, le rendement est d'environ 87%.

Exemple 3:
Action de la température sur l'élution.

L'élution dépend de la température et de l'agitation. Le tableau A montre clairement que le chauffage est nécessaire pour une élution rapide. Dans cet exemple l'élution fut étudiée à des températures variables, avec agitation de 15 minutes et maintien du contact sans agitation pendant 24 heures. Dans tous les cas la solution d'élution était de l'hydroxyde de sodium 3 N.

Tableau A

| Temps | Germanium g/l (phase aqueuse) 20° C | 35° C | 50° C |
|---|---|---|---|
| 30 minutes | 0,34 | 0,39 | 0,48 |
| 1 heure | 0,34 | 0,39 | 0,48 |
| 2 h 30 | 0,34 | 0,38 | 0,58 |
| 5 heures | 0,36 | 0,49 | 0,58 |
| 6 h 30 | 0,38 | 0,54 | 0,59 |
| 21 h 30 | 0,58 | 0,58 | 0,60 |
| 24 heures | 0,60 | 0,60 | 0,63 |

Le tableau suivant, Tableau B, réunit les résultats de l'élution à différentes températures, mais, dans ce cas, l'agitation était permanente. La concentration initiale de la phase organique en germanium était de 0,6 g/l. Dans ce cas l'élution est beaucoup plus rapide.

Tableau B

| Temps 22° C | 40° C | 50° C | Germanium g/l (phase aqueuse) 22° C | 40° C | 50° C |
|---|---|---|---|---|---|
| 30 mn | 15 mn | 30 mn | 0,14 | 0,56 | 0,61 |
| 1 h 30 | 30 mn | 1 h | 0,56 | 0,59 | 0,63 |
| 3 h 15 | 1 h | 1 h 30 | 0,62 | 0,59 | 0,63 |
| 5 h 30 | 1 h 30 | 2 h | 0,63 | 0,60 | 0,65 |
| 9 h | 3 h | 3 h | 0,67 | 0,61 | 0,71 |
| 21 h 30 | 4 h | 3 h 30 | 0,70 | 0,64 | 0,74 |
| | 6 h | 5 h | | 0,63 | 0,79 |
| | 21 h 30 | 6 h 30 | | 0,64 | 0,80 |

Le tableau suivant, Tableau C, montre qu'à 60 °C avec agitation, l'élution est complète en moins de 30 minutes. La concentration initiale en germanium dans la phase organique était de 1,2 g/l. Le rapport entre la phase organique et la phase aqueuse était égal à 1.

Tableau C

| Temps en minutes | Germanium g/l |
|---|---|
| 2 | 0,93 |
| 7 | 1,00 |
| 12 | 1,15 |
| 17 | 1,18 |
| 22 | 1,17 |
| 27 | 1,18 |

Evidemment, l'invention n'est pas limitée au traitement des solutions de lixiviation. Par exemple, une autre application spécifique est l'extraction du germanium du speiss, puisque ladite extraction est sélective du germanium vis-à-vis du fer et de l'arsenic.

**Revendications**

1. Procédé pour l'extraction sélective du germanium à partir d'une solution aqueuse acide d'un pH au plus égal à 2 contenant sous forme de sulfate, outre le germanium, au moins un autre métal choisi parmi le fer ou le cuivre et éventuellement le cadmium, le zinc, le cobalt, l'arsenic, l'aluminium, le gallium et le nickel, la concentration en groupements sulfates de la solution étant au moins égale à 1 M, ledit procédé comportant:

– une extraction du germanium de ladite solution aqueuse par mise en contact de ladite solution avec un milieu organique liquide qui contient un diluant et un extractant, ledit diluant étant non miscible avec ladite solution aqueuse, ledit extractant étant choisi parmi les dérivés de l'oxine ayant une longue chaîne hydrocarbonée de 8 à 19 atomes de carbone, ladite étape d'extraction formant une phase aqueuse contenant la plus grande partie dudit au moins un autre métal et une phase organique contenant la plus grande partie du germanium initialement contenu dans ladite solution aqueuse, et

– une élution du germanium de ladite phase organique par mise en contact de ladite phase avec un milieu aqueux, ladite étape d'élution formant une phase aqueuse contenant la plus grande partie du germanium de ladite solution aqueuse et une phase organique contenant ledit diluant et ledit extractant.

2. Procédé selon la revendication 1, caractérisé par le fait que l'élution est réalisée à une température supérieure à 40 °C sous agitation.

3. Procédé selon les revendications 1 et 2 prises séparément, caractérisé par le fait que la longue chaîne hydrocarbonée dudit extractant comporte une insaturation éthylénique.

4. Procédé selon les revendications 1 à 3 prises séparément, caractérisé par le fait que le pH du milieu utilisé dans l'étape d'élution est supérieur à 13.

5. Procédé selon les revendications 1 à 3 prises séparément, caractérisé par le fait que l'étape d'élution est réalisée par une solution d'acide fluorhydrique.

**Claims**

1. Process for the selective extraction of germanium from an aqueous acid solution with a maximum pH of 2, containing in the form of a sulphate, in addition to germanium, at least one other metal selected from iron or copper and if appropriate cadmium, zinc, cobalt, arsenic, aluminium, gallium and nickel; the concentration in sulphate groups of the solution being at least equal to 1 M, the said process comprising:

– extraction of germanium from the said aqueous solution by placing the said solution in contact with an organic liquid medium which contains a diluent and an extractant, the said diluent being non-miscible with the said aqueous solution, the said extractant being selected from the derivatives of oxine having a long hydrocarbon chain of 8 to 19 carbon atoms, the said extraction stage

forming an aqueous phase containing most of the said at least one other metal and an organic phase containing most of the germanium initially contained in the said aqueous solution, and

– elution of the germanium from the said organic phase by placing the said phase in contact with an aqueous medium, the said elution stage forming a phase containing most of the germanium of the said aqueous solution and an organic phase containing the said diluent and the said extractant.

2. Process according to claim 1, characterised by the fact that the elution is carried out at a temperature higher than 40 °C, and with agitation.

3. Process according to claims 1 to 2 taken separately, characterised by the fact that the long hydrocarbon chain of the said extractant exhibits ethylenic unsaturation.

4. Process according to claims 1 to 3 taken separately, characterised by the fact that the pH of the alkaline medium used in the elution stage is greater than 13.

5. Process according to claims 1 to 2 taken separately, characterised by the fact that the elution stage is carried out with the aid of a solution of hydrofluoric acid.

**Patentansprüche**

1. Verfahren zur selektiven Extraktion von Germanium aus einer wässrigen sauren Lösung mit einem pH-Wert von höchstens 2, die als Sulfate ausser Germanium noch mindestens ein anderes Metall, ausgewählt unter Eisen oder Kupfer und ggf. Cadmium, Zink, Kobalt, Arsen, Aluminium, Gallium und Nickel, enthält, wobei die Konzentration an Sulfatgruppen in der Lösung mindestens 1 mol/l beträgt, gekennzeichnet durch

– Extraktion des Germaniums aus der wässrigen Lösung durch Kontaktieren der Lösung mit einem flüssigen organischen Medium, das ein Verdünnungsmittel und ein Extraktionsmittel enthält, wobei das Verdünnungsmittel mit der wässrigen Lösung nicht mischbar ist und das Extraktionsmittel unter Oxinderivaten mit einer langen Kohlenwasserstoffkette von 8 bis 19 Kohlenstoffatomen ausgewählt wird und durch die Extraktion eine wässrige Phase, die den grösseren Anteil des mindestens einen anderen Metalls enthält, und eine organische Phase gebildet werden, die den grösseren Anteil des in der wässrigen Lösung ursprünglich vorhandenen Germaniums enthält, und

– Elution des Germaniums aus der organischen Phase durch Kontaktieren der Phase mit einem wässrigen Medium, wobei durch die Elution eine Phase, die den grösseren Anteil des Germaniums aus der wässrigen Lösung enthält, und eine organische Phase gebildet werden, die das Verdünnungsmittel und das Extraktionsmittel enthält.

2. Verfahren nach Anspruch 1, gekennzeichnet durch Durchführung der Elution bei einer Temperatur über 40 °C unter Rühren.

3. Verfahren nach einem der Ansprüche 1 bis 2, gekennzeichnet durch Verwendung eines Extraktionsmittels mit einer ethylenisch ungesättigten langen Kohlenwasserstoffkette.

4. Verfahren nach einem der Ansprüche 1 bis 3, gekennzeichnet durch Verwendung bei der Elution eines alkalischen Mediums mit einem pH-Wert über 13.

5. Verfahren nach einem der Ansprüche 1 bis 2, gekennzeichnet durch Verwendung bei der Elution einer Fluorwasserstoffsäurelösung.

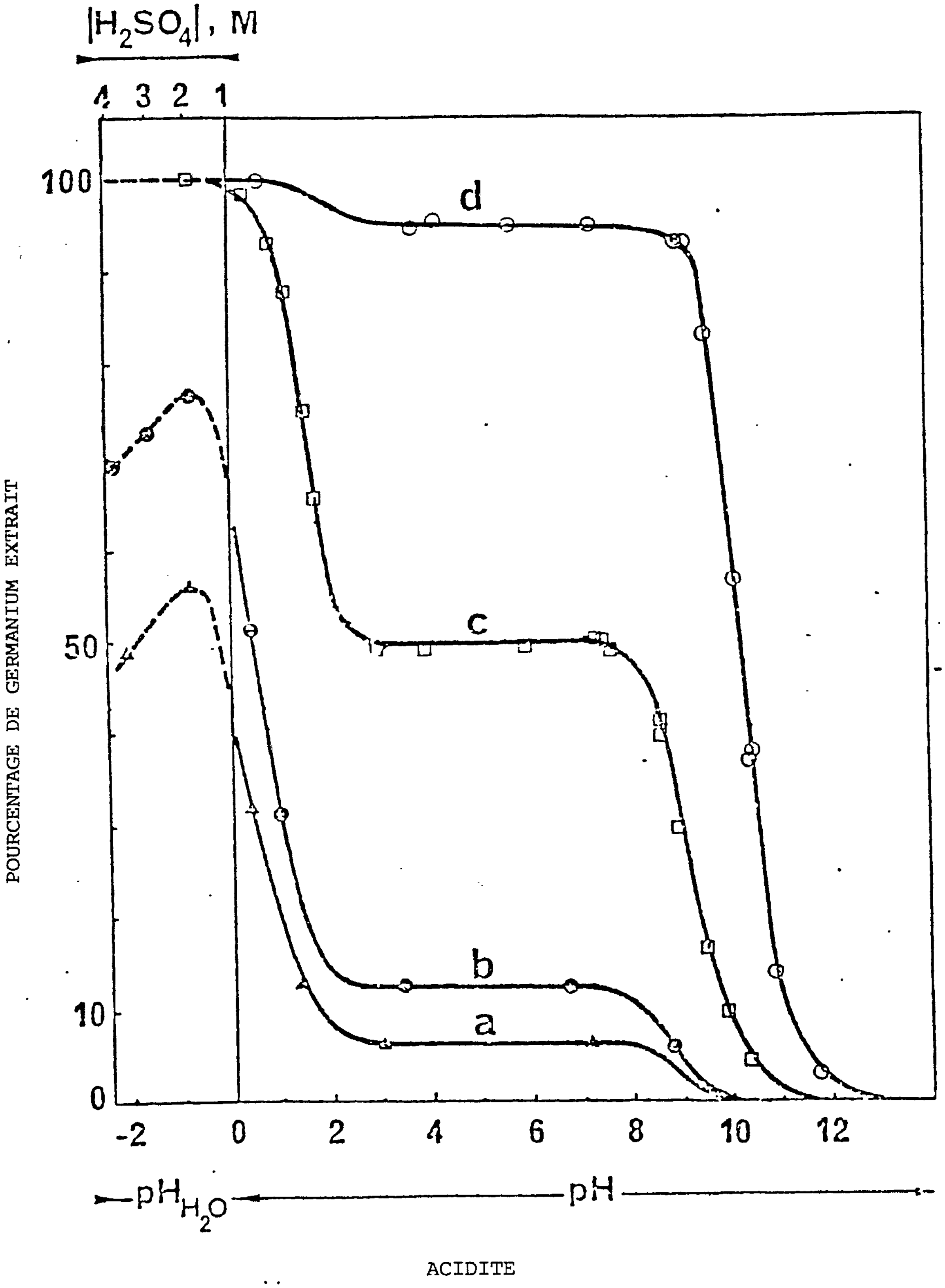
|H2SO4|, M
4 3 2 1
100
50
10
0
d
c
b
a
-2 0 2 4 6 8 10 12
pH H2O
pH
POURCENTAGE DE GERMANIUM EXTRAIT
ACIDITE

Fig 1

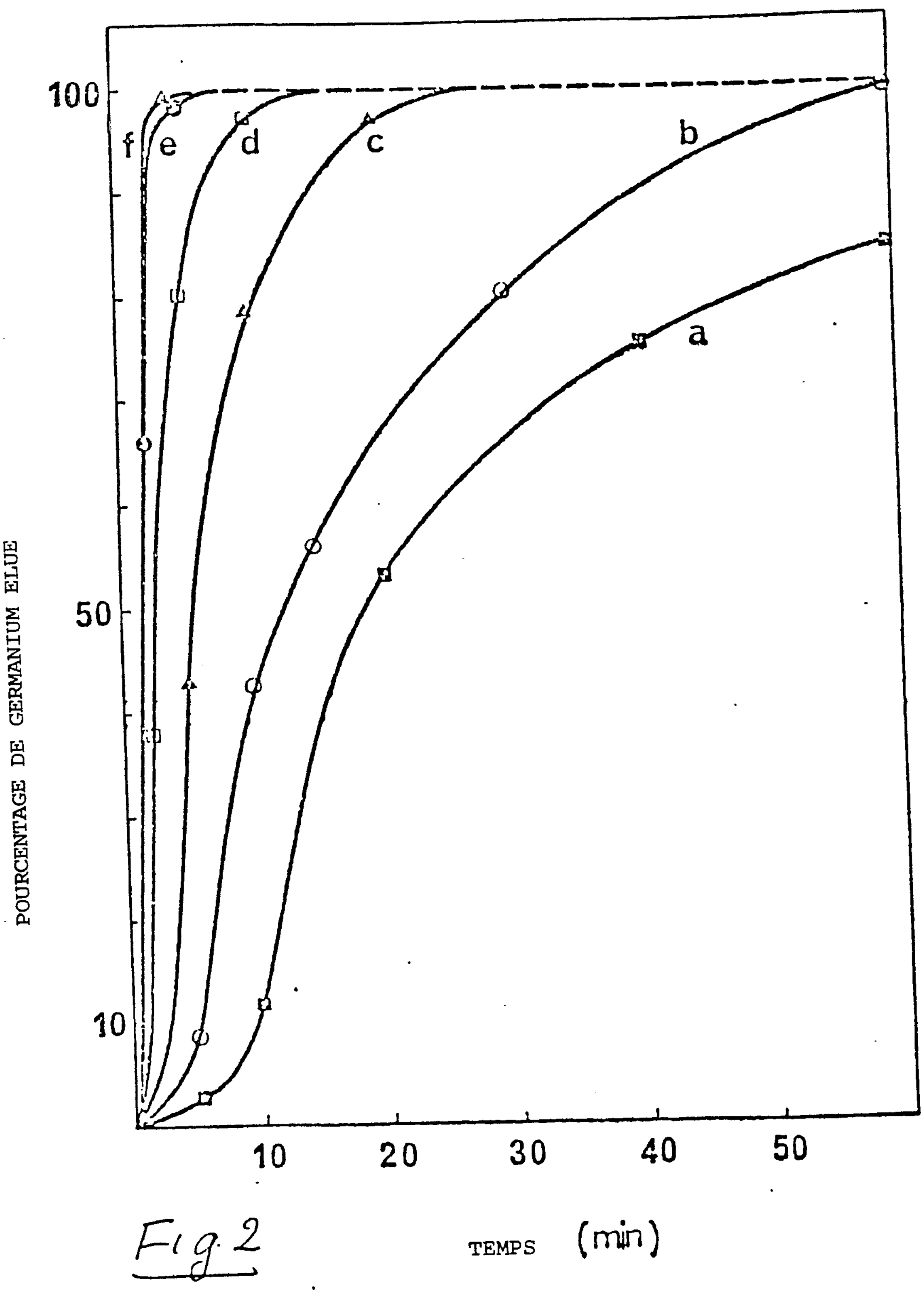

100
50
10
POURCENTAGE DE GERMANIUM ELUE
f
e
d
c
b
a
10
20
30
40
50
TEMPS (min)


Fig. 2